# EUROPÄISCHE PATENTSCHRIFT

(11) **EP 1 990 561 B1**
(45) Veröffentlichungstag und Bekanntmachung des Hinweises auf die Patenterteilung: **14.04.2010**
(21) Anmeldenummer: 07009368.7
(22) Anmeldetag: 10.05.2007
(51) Int. Cl.: F16H 61/00, F16H 61/28, F16H 63/34, F16H 3/00, F16H 59/72

(54) **Verfahren zum Schalten eines Neutralzustandes eines automatisierten Stufengetriebes**
Method for establishing a neutral state in an automated stepped transmission
Procédé pour réaliser un état de neutre dans une transmission étagée automatisée

(43) Veröffentlichungstag der Anmeldung: 12.11.2008
(73) Patentinhaber: ZF Friedrichshafen AG, 88038 Friedrichshafen (DE)
(72) Erfinder: Schneider, Hans-Jürgen, 97440 Werneck (DE); John, Thomas, 97524 Sulzheim (DE); Bühner, Mario, 97447 Gerolzhofen (DE)

(56) Entgegenhaltungen:
- EP-A- 0 709 602
- EP-A- 0 841 505
- EP-A- 1 403 571
- DE-C1- 19 928 374
- FR-A- 2 732 278
- JP-A- 4 277 373

## Beschreibung

Die Erfindung betrifft ein Verfahren zum Schalten eines automatisierten Stufengetriebes eines Kraftfahrzeuges, wobei zum Einlegen und Auslegen von Gangstufen des Getriebes Schaltkupplungen mittels zugeordneten Aktuatoren betätigbar sind.

Weiterhin betrifft die Erfindung eine Einrichtung zum Schalten eines automatisierten Stufengetriebes. Schaltvorgänge von automatisierten Stufengetrieben, wie z. B. automatisierte Handschaltgetriebe oder Doppelkupplungsgetriebe, werden üblicherweise über ein Steuergerät, welches sowohl mit dem Motor, als auch mit einer Kupplungseinrichtung, als auch mit dem Getriebe in Signalverbindung steht, gesteuert und geregelt. Die Kupplung sowie das Getriebe werden mittels zugeordneter Aktuatoren, welche von dem Steuergerät angesteuert werden betätigt. Bei einem Schaltvorgang von einem Ausgangsgang in einen Zielgang wird die Kupplung mittels des Kupplungsaktuators geöffnet, so dass der Antriebsstrang aufgetrennt ist. Anschließend wird mittels dem Getriebe zugeordneten Aktuator der Ausgangsgang ausgelegt, und der neue Zielgang eingelegt. Anschließend wird die Kupplung mittels des Aktuators wieder geschlossen, um den Antriebsstrang zu schließen und Drehmoment vom Motor über die Kupplung und den neuen Stufengang auf die Antriebsräder des Fahrzeugs zu übertragen. Bei einem Anfahrvorgang wird entsprechend verfahren, nämlich nach Erkennen eines Anfahrwunsches, Öffnen bzw. Offenhalten der Kupplung mittels der Kupplungsaktuatorik, anschließend automatisiertes Einlegen des Zielganges und Schließen der Kupplung zur Drehmomentübertragung.

Im Stand der Technik sind bereits Verfahren zur Steuerung von Schaltvorgängen von automatisierten Schaltgetrieben offenbart. So offenbart z. B. die DE 199 28 374 C1 ein gattungsbildendes Verfahren, bei welchem im Fahrbetrieb des Kraftfahrzeugs ein Getriebeleerlauf mittels eines Schalthebels angewählt wird. Sofern sich das Fahrzeug noch im Fahrbetrieb befindet wird zwar die Kupplung automatisiert geöffnet, der aktuell eingelegte Getriebegang wird jedoch solange nicht ausgelegt, solange sich das Fahrzeug noch bewegt.

Ein anderes Verfahren zum Schalten eines automatisierten Getriebes ist aus der DE 198 45 604 C1 bekannt. Hierbei wird eine Schaltkupplung des Getriebes mittels des Getriebeaktuators schon vor dem vollständigen Öffnen der Reibungskupplung, welche mit einem Kupplungsaktuator geöffnet und geschlossen wird, in Richtung der Offenstellung der Getriebeschaltkupplung vorgespannt. Weitere Verfahren zum Schalten von automatisierten Stufengetrieben sind z. B. aus der WO 02/055 903 bekannt. Hier wird unter anderem ein Verfahren vorgeschlagen, welches bei Tieftemperaturen Anwendung findet und bei welchem zum Einlegen eines Getriebeganges mehrere Synchroneinrichtungen verschiedener Gänge in Richtung Einlegen eines Ganges vorgespannt werden, um die entsprechende Getriebeeingangswelle auf Synchrondrehzahl zu bringen.

Insbesondere bei automatisierten Stufengetrieben mit nasslaufenden Kupplungen hat sich das über die Kupplungen übertragene Schleppmoment infolge von hochviskosem Kühlöl bei Tieftemperaturen als Problem erwiesen.
Das Kühlöl haftet hierbei zwischen den angetriebenen motorseitigen und den nichtangetriebenen getriebeseitigen Lamellen und überträgt hierbei ein Schleppmoment von den angetrieben auf die nicht angetriebenen Lamellen. Infolge dieser Schleppmomenten wird die Getriebeeingangswelle, sofern kein ihr zugeordneter Gang im Getriebe eingelegt ist, bei einer gewissen Drehzahl, welche bis zur Motordrehzahl ansteigen kann, von der motorseitigen Kupplungshälfte mitgeschleppt. Diese Drehzahl sorgt im Stillstand des Fahrzeugs für Komfortprobleme beim Einlegen einer Fahrstufe, da mittels der Schaltkupplung des einzulegenden Ganges ein Synchronmoment zum Abbremsen der Getriebeeingangswelle bis zum Stillstand erfolgen muss. Zum Einlegen eines Anfahrganges unter solchen Bedingungen ist entweder ein erhöhter Synchronkraftbedarf mittels des Getriebeaktuators aufzubringen oder aber die Synchronzeit verlängert sich über ein für den Fahrer akzeptables Niveau hinaus.

Es wurden im Stand der Technik bereits Lösungen vorgeschlagen in welchen ein Gang eingelegt bleibt, wenn ein Getriebewählhebel sich in der Neutralstellung befindet. In dieser Stellung wird lediglich die Kupplung geöffnet oder bleibt geöffnet. Nachteilig hierbei ist jedoch, dass durch einen Fehler in der Kupplungssteuerung, welcher ein Schließen der Kupplung verursachen kann, ein ungewolltes Anfahren in Neutralstellung des Wählhebels erfolgt. Dieses Sicherheitsrisiko könnte man zwar durch ein redundantes Absperrventil für die Kupplung beheben, damit ein Einfachfehler der Kupplungssteuerung nicht zum angesprochenen Anfahren in Neutral führen kann, jedoch wird hierdurch sowohl die Steuerung als auch die hydraulische Auslegung, sofern die Kupplung, wie auch das Getriebe, hydraulisch angesteuert wird, aufwendiger, größer und teurer.

Hiervon ausgehend ist es Aufgabe der Erfindung, das Einlegen eines Ganges aus der Neutralstellung des Wählhebels heraus, ohne Komforteinbuße, zu gestalten.

Zur Lösung dieser Aufgabe ist vorgesehen, dass in bestimmten Betriebszuständen des Kraftfahrzeuges eine Schaltkupplung des Getriebes in Richtung Einlegen einer Gangstufe getätigt wird. Diese Betriebszustände sind vorzugsweise dadurch gekennzeichnet, dass eine Komforteinbuße beim Gangeinlegen wahrscheinlich erscheint. Die Schaltkupplungen des Stufengetriebes sind vorzugsweise, zumindest teilweise, mit sogenannten Synchronisiereinrichtungen ausgestattet, welche eine Synchronisierung der Drehzahlen der Getriebeeingangswelle und der entsprechenden Drehzahl der Zahnradpaare der einzelnen Gangstufen realisiert. Hierbei ist üblicherweise ein Zahnrad des Zahnradpaares fest mit einer Getriebewelle (Eingangswelle oder Ausgangswelle) verbunden und das andere Zahnrad als Losrad ausgebildet, welches mittels der Schaltkupplung mit der zugeordneten Getriebewelle (Ausgangswelle oder Eingangswelle) drehfest verkoppelt wird. Die einzelnen Gangstufen oder Gänge des Getriebes werden durch die jeweilige Übersetzung der kämmenden Zahnradpaare gebildet. Das "Schalten" eines Ganges wird mittels der zugeordneten Schaltkupplung realisiert, wodurch die Getriebeeingangswelle und die Getriebeausgangswelle mit der entsprechenden Übersetzung der Zahnradstufe drehverkoppelt werden. Beim Einlegen des Ganges wird zuerst mittels Synchronisiereinrichtung die Drehzahl der Getriebeeingangswelle synchronisiert und anschließend ein Formschluss mittels der Schaltkupplung hergestellt. Als Neutralzustand des Getriebes ist im Folgenden der Betriebszustand definiert, in welchem im Getriebe kein Gang eingelegt ist, und sich der Wählhebel des Getriebes in der Neutralstellung N befindet.

Auf die Ausgestaltung des Wählhebels soll im Einzelnen nicht eingegangen werden, da dieser im Allgemeinen bekannt ist.
Zur Funktionalität des Wählhebels soll nur so viel gesagt werden, dass dieser mit dem Steuergerät, welches für die Kupplung und/oder für das Getriebe zuständig ist, wirksam verbunden ist. Dies kann über ein separates Steuergerät geschehen oder aber durch ein und dasselbe Steuergerät. Im Wesentlichen werden hierbei dem Steuergerät die aktuelle Wählposition des Wählhebels mitgeteilt. Die wesentlichen Positionen des Wählhebels sind üblicherweise die Neutralstellung N, sowie eine Fahrstellung D, als auch eine Rückwärtsfahrstellung R und eine Parkstellung P. Des Weiteren können dem Steuergerät Hochschalt- bzw. Rückschaltwünsche des Fahrers mittels des Wählhebels signalisiert werden. Das Steuergerät kann Bestandteil einer übergeordneten Steuereinheit, welche aus verschiedenen Steuergeräten besteht, sein oder selbst als Steuereinheit angesehen werde, welche verschiedene Hardwarekomponenten ansteuert. Abgesehen von der Antriebseinheit werden zumindest folgende Komponenten mittels des Steuergerätes angesteuert: - der oder die Kupplungsaktuatoren, der Getriebeaktuator und eine Hydraulikeinheit, welche den Kühlölvolumenfluss steuert. Die Aktuatoren für die Kupplung und das Getriebe können als hydraulische integrierte Aktuatoren in Form von hydraulischen Kolben-Zylindereinheiten ausgebildet sein oder z. Bsp. auch als elektromechanische Aktuatoren mit elektrisch angetriebenen Motoren und zugeordneten Aktuatorgetrieben.
Auf die spezielle Ausgestaltung der Aktuatorik für das Getriebe und die Kupplung sowie auf das Stufengetriebe und die Kupplungseinrichtung selbst soll nicht näher eingegangen werden, da solche Komponenten hinlänglich aus dem Stand der Technik bekannt sind.

Unabhängig von der Ausgestaltung der Aktuatoren und der anderen HardwareKomponenten ist bei dem erfindungsgemäßen Verfahren von Vorteil, dass in Situationen des Neutralzustandes des Getriebes, bei welchem der Antriebsmotor des Kraftfahrzeuges läuft, das auf die geöffneten Kupplung wirkende Schleppmoment, welches ein Mitdrehen der Getriebeeingangswelle bewirken würde, in seiner Wirkung reduziert wird. Hierzu wird eine dem Schleppmoment entgegen gerichtete Bremswirkung auf die Getriebeeingangswelle mittels der Schaltkupplungen des Getriebes aufgebracht. Bei stehendem Fahrzeug wird durch das erfindungsgemäße Ansynchronisieren der mindestens einen Schaltkupplung die Getriebeeingangswelle auf Nulldrehzahl abgebremst.

Ein bevorzugtes Verfahren nach der Erfindung sieht vor, dass genau eine Schaltkupplung des Getriebes in Richtung Einlegen der zugeordneten Getriebestufe getätigt wird. Es können jedoch auch mehrere Schaltkupplungen, welche verschiedenen Gangstufen zugeordnet sind, in Richtung Einlegen mittels des Getriebeaktuators, betätigt werden.

Erfindungsgemäß wird die mindestens eine Schaltkupplung in Richtung Einlegen dann betätigt, wenn der Wählhebel des Getriebes in Neutral steht oder in die Neutralstellung gebracht wird. Dies kann z. B. bei einer Verschwenkung des Wählhebels aus der Parkstellung P in die Neutralstellung N erfolgen. Wird mittels der Steuereinrichtung die Neutralstellung detektiert, wird erfindungsgemäß das Verfahren durchgeführt. Wird hingegen aus einer Fahrsituation heraus der Wählhebel von der Stellung D nach N verschwenkt, werden der oder die eingelegten Gänge mittels des Getriebeaktuators ausgelegt und anschließend die mindestens eine Schaltkupplung in Richtung Einlegen betätigt. Entsprechend wird verfahren, wenn aus einem Rückwärtsfahrmodus R der Wählhebel aus der Stellung R nach N verschwenkt wird. Es kann hierbei vorgesehen sein, dass nach erfolgtem Auslegen der Ganges mittels der Schaltkupplung diese unmittelbar wieder in Richtung Einlegen betätigt wird, oder dass erst eine Reaktion der Getriebeeingangswelle abgewartet wird und erst nachdem eine ansteigende Drehzahl detektiert wird, die Schaltkupplung in Richtung Einlegen eines Ganges betätigt wird, um die Welle wieder abzubremsen.

Ein bevorzugtes Verfahren sieht vor, dass die mindestens eine Schaltkupplung des Stufengetriebes einer Anfahrgangstufe zugeordnet ist. Vorteilhaft hierbei ist, dass beim Einleiten eines Anfahrvorganges infolge eines Verschwenkens des Wählhebels aus N heraus in eine der Fahrstellungen D oder R die Anfahrgangstufe bereits ansynchronisiert ist und das Einlegen des Ganges schneller erfolgen kann. Die bereits ansynchronisierte Schaltkupplung wird beim Verschwenken des Wählhebels nach D oder R weiter in Richtung Einlegen betätigt, wodurch dann ein Formschluss der Schaltkupplung hergestellt wird.

Das erfindungsgemäße Verfahren zeichnet sich insbesondere dadurch aus, dass verschiedene Schaltkupplungen des Stufengetriebes, welche unabhängig voneinander schaltbar sind, in Richtung Einlegen einer zugeordneten Gangstufe betätigt werden können. Als besonders vorteilhafte Ausgestaltung des Verfahrens kann mindestens eine Schaltkupplung einer Vorwärtsgangstufe und eine Schaltkupplung einer Rückwärtsfahrstufe gleichzeitig oder nacheinander in Richtung Einlegen der Anfahrgangsstufen betätigt werden. Vorteilhaft hierbei ist, dass unabhängig von einem nachfolgendem Anfahrwunsch des Fahrers in Rückwärts- oder Vorwärtsrichtung die zugeordnete Anfahrstufe bereits ansynchronisiert ist, und der Anfahrgang nur noch formschlüssig mit der zugeordneten Getriebewelle geschaltet werden muss.

Eine erfindungsgemäße Variante dieses Verfahrens sieht vor, dass das Stufengetriebe als Doppelkupplungsgetriebe ausgebildet ist, welches zwei Getriebeeingangswellen aufweist, welchen jeweils eine Kupplungsanordnung zugeordnet ist. Solche Doppelkupplungsgetriebe zeichnen sich dadurch aus, dass zwei unabhängige Drehmomentübertragungspfade im Getriebe ausgebildet sind, zwischen denen lastfrei hin und her geschaltet werden kann. Eine höchstbevorzugte Ausführung des Verfahrens sieht bei Anwendung für Doppelkupplungsgetriebe vor, dass in Neutralstellung des Getriebes in jedem Getriebepfad mindestens eine Schaltkupplung in Richtung Einlegen einer Fahrstufe, höchstvorzugsweise der jeweiligen Anfahrgangsstufe des Getriebepfades betätigt wird. Hierbei können in dem einen Getriebepfad die Rückwärtsgangfahrstufe und evtl. ein Vorwärtsgang ansynchronisiert werden und im anderen Getriebepfad mindestens eine weitere Vorwärtsgangstufe ansynchronisiert werden. Vorteilhaft hierbei ist, dass schnelle Fahrtrichtungswechsel komfortabler erfolgen können und eine geringere Synchronarbeit bedingen, da die entsprechenden Gangstufen bereits ansynchronisiert sind, und beide Getriebeeingangswellen abgebremst sind.

Erfindungsgemäß wird durch das Ansynchronisieren der wenigstens einen Schaltkupplung die zugeordnete Getriebeeingangswelle des Stufengetriebes abgebremst. Die Getriebeeingangswelle soll hierbei soweit abgebremst werden, bis die Drehzahl der Eingangswelle unter eine Drehzahlschwelle fällt oder bis im Wesentlichen Stillstand erreicht ist. Vorteilhaft hierbei ist, wenn die Drehzahl der Getriebeeingangswelle hierbei drehzahlüberwacht wird und die Steuereinrichtung die Drehzahl der Getriebeeingangswelle für eine Drehzahlregelung derart verwendet, dass die Ansteuerung der Schaltkupplung entsprechend der Drehzahl geregelt erfolgt. Die Regelung der Schaltkupplung kann hierbei z. B. positionsgeregelt oder aber auch druckgeregelt erfolgen und ist im Wesentlichen abhängig vom verwendeten Getriebeaktuator, welcher hydraulisch, pneumatisch, elektromechanisch oder anderweitig fremdkraftbetrieben ausgebildet sein kann. Eine Positionsregelung der Schaltkupplung kann z. Bsp. dadurch erfolgen, dass Positionssensoren Verschiebestellungen oder Verschwenkstellungen von Schaltstangen oder Schaltgabeln des Getriebes sensieren, welche mit den Schaltkupplungen verbunden sind. Hierbei kann zum Ansynchronisieren gezielt eine vorbestimmte Schaltstellung angefahren werden. Das Verfahren weist den Vorteil auf, dass das Ansynchronisieren mit einer Mindestkraft erfolgen kann und somit ein versehentliches Einlegen der zugeordneten Gangstufe zuverlässig verhindert wird. Es ist hierbei erfindungsgemäß vorgesehen, dass die Einrückkraft, bzw. der Einrückweg solange vergrößert wird, bis die Drehzahl der Getriebeeingangswelle den Schwellwert erreicht oder unterschreitet. Weiterhin ist jedoch zur Vermeidung eines unbeabsichtigten Einlegens einer Gangstufe erfindungsgemäß vorgesehen, dass die Einrückkraft, bzw. der Einrückweg nur bis zu einem Maximalen Grenzwert vergrößert wird, unabhängig ob die beim Maximalwert aufgebrachte Synchronkraft ausreicht die Getriebedrehzahl abzubremsen. Eine vorteilhafte Weiterbildung sieht hierbei vor, dass der Maximalwert abhängig von Betriebsparametern des Kraftfahrzeuges bestimmbar ist. So kann zum Beispiel vorgesehen sein, dass der Maximalwert mit tieferen Öltemperaturen des Getriebeöls oder des Kupplungsöls ansteigt, da bei tieferen Temperaturen eine größere Synchronkraft erforderlich ist, um den Gang einzulegen. Es kann z. B. vorgesehen sein, dass die Schaltkupplung nur soweit ansynchronisiert wird, dass bei stehendem Fahrzeug die Drehzahl der Getriebeeingangswelle unter einen Schwellwert von z. B. drei Umdrehungen pro Minute fällt. Alternativ kann die Getriebeeingangswelle auch bis zum detektierten Stillstand abgebremst werden. Eine erfindungsgemäße zusätzliche Unterstützung des Verfahrens kann dadurch erzielt werden, dass vor oder während des Ansynchronisierens des mindestens einen Getriebeganges der Kühlölvolumenfluss mittels der Steuereinheit abgestellt oder zumindest stark reduziert wird. Hierdurch wird erreicht, dass die Schleppmomente reduziert werden, wodurch ein Abbremsen der Getriebeeingangswelle erleichtert wird.

Zur Drehzahlmessung sind erfindungsgemäß Drehzahlsensoren vorgesehen, welche sowohl die Drehzahlen der Getriebeeingangswellen sensieren können, als auch Drehzahlsensoren, die die Getriebeabtriebswelle, welche mit den Antriebsrädern verbunden ist, detektieren. Auch wird dem Steuergerät die aktuelle Drehzahl der Kupplungseingangsseite bzw. die Motorausgangsdrehzahl übermittelt.

Es wurde bereits angesprochen, dass ein Maximaldruck bzw. eine Maximalkraft zum Betätigen der Schaltkupplung in Richtung Einlegen vorgesehen sein kann.

Erfindungsgemäß kann zusätzlich eine Zeitüberwachung des erfindungsgemäßen Verfahrens vorgesehen sein, so dass ein Abbruchkriterium für das Verfahren der Gestalt vorgesehen werden kann, dass nach Überschreiten eines zu definierenden Zeitintervalls oder Nichtereichen des vorgesehenen Drehzahlniveaus, bzw. Nichtereichen der vorgesehenen Drehzahlschwelle, ein Abbruch des Verfahrens erfolgen kann. Die Schaltkupplungen werden dann wieder in Richtung Auslegen getätigt.

Nach einer bevorzugten Ausführungsform des Verfahrens ist vorgesehen, dass die ersten Betriebszustände durch ein im Wesentlichen stillstehendes Fahrzeug definiert sind.

Weiter können die ersten Betriebszustände durch eine Betriebstemperatur unter einer definierten Schwellentemperatur definiert sein. Hierbei ist insbesondere an die Getriebetemperatur, höchstvorzugsweise die Öltemperatur oder aber die Außentemperatur gedacht. Beispielsweise können hierbei die ersten Betriebszustände durch eine Temperatur < 10 °C definiert sein. Wie bereits erwähnt, kann die Drehzahl der Getriebeingangswellen drehhzahlsensiert sein. Hierbei kann vorgesehen sein, dass eine sensierte Drehzahlerhöhung einer Getriebeeingangswelle zum Durchführen des erfindungsgemäßen Verfahrens führt. Hierbei kann die sensierte Drehzahlerhöhung einen ersten Betriebszustand darstellen. Weiterbildend kann für ein Doppelkupplungsgetriebe mit zwei Getriebeeingangswellen hierbei vorgesehn sein, dass nur zugeordnete Schaltkupplungen derjenigen Getriebeeingangswelle in Richtung Einlegen betätigt werden, welche einer Drehzahlerhöhung infolge von Schleppmomenten unterliegt. Schaltkupplungen der andere Getriebeeingangswelle bleiben ausgerückt, falls keine Drehzahlerhöhung infolge von Schleppmomenten sensiert wird.

Eine Weiterbildung des Verfahrens sieht vor, dass auch bei geringen Rollgeschwindigkeiten oder Fahrgeschwindigkeiten des Kraftfahrzeugs das erfindungsgemäße Verfahren durchgeführt wird. Hierbei kann die Drehzahl der Getriebeeingangswellen nicht auf Null abgebremst werden, sondern wird erfindungsgemäß auf eine Synchrondrehzahl abgebremst, welche der Geschwindigkeit des Fahrzeugs und der ansynchronisierten Fahrstufe entspricht. Entsprechendes gilt für die bereits angesprochene Schwelldrehzahl, welche sich bei rollendem Fahrzeug als eine Drehzahldifferenz zwischen der Drehzahl der Getriebeeingangswelle und der Drehzahl der Getriebeausgangswelle dividiert durch die Getriebeübersetzung ergibt.

Eine Weiterbildung des Verfahrens sieht vor, dass im Neutralzustand in zweiten Betriebszuständen des Kraftfahrzeuges keine Schaltkupplung in Richtung Einlegen betätigt wird. Hierbei können die zweiten Betriebszustände des Kraftfahrzeuges, ausgehend von den ersten Betriebszuständen, durch Erreichen einer Betriebstemperatur des Kraftfahrzeuges bestimmt sein. So kann ein zweiter Betriebszustand bei Überschreiten der Betriebstemperatur von z. Bsp. 60°C erreicht werden. Weiterhin können diese Betriebszustände bei Überschreiten einer Fahrgeschwindigkeit oder Rollgeschwindigkeit definiert sein. Auch ein Neutralzustand des Getriebes, bei welchem keine Drehzahlerhöhung der Getriebeeingangswelle sensiert wird kann einen zweiten Betriebszustand darstellen.

Weiterführend kann für die zweiten Betriebszustände des Kraftfahrzeuges vorgesehen sein, dass der Kühlölvolumenfluss mittels der Steuereinheit nicht abgestellt wird. Hierdurch wird erreicht, dass Kühlung der Lamellen nicht unterbrochen wird. Schleppmomente, welche in den zweiten Betriebszuständen auf die Getriebeeingangswelle wirken, sind systembeding geringer als die Schleppmomente in den ersten Betriebszuständen, daher können auf eine Schleppmomentreduzierung durch Abschalten des Kühlölvolumenstromes verzichtet werden.

Eine besonders bevorzugte Ausgestaltung der Erfindung sieht ein Doppelkupplungssystem, umfassend ein Doppelkupplungsgetriebe, und eine Doppelkupplungseinrichtung mit zwei nasslaufenden Lamellenkupplungen vor, bei welcher im Neutralzustand des Doppelkupplungsgetriebes mindestens eine Schaltkupplung des Getriebes in Richtung Einrichtung betätigt wird, wodurch die zugeordnete Gangstufe ansynchronisiert wird und wodurch die Drehzahl der Getriebeeingangswelle abgebremst wird. Wie bereits angesprochen kann das erfindungsgemäße Verfahren für jede Getriebeeingangswelle unabhängig voneinander durchgeführt werden. Hierbei können in beiden Getriebezweigen unterschiedliche Betriebszustände (erste und zweite) vorliegen, sodass im Neutralzustand in einem Teilgetriebe das beanspruchte Verfahren durchgeführt wird und im anderen nicht.

## Patentansprüche

1. Verfahren zum Schalten eines automatisierten Stufengetriebes eines Kraftfahrzeuges, wobei zum Einlegen und Auslegen von Gangstufen des Getriebes Schaltkupplungen, von welchen zumindest eine mit einer Synchronisiereinrichtungen ausgestattet ist, mittels eines Getriebeaktuators betätigbar sind,
**dadurch gekennzeichnet,**
**dass** in einem Neutralzustand des Getriebes, in welchem im Getriebe keine Gangstufe eingelegt ist und in welchem sich der Wählhebel des Getriebes in einer Neutralstellung N befindet, mindestens eine Schaltkupplung im Sinne eines Ansynchronisieren der mindestens einen Schaltkupplung in Richtung Einlegen betätigt wird, ohne dass jedoch die mindestens eine Gangstufe eingelegt wird.

2. Verfahren nach Anspruch 1,
**dadurch gekennzeichnet,**
**dass** die mindestens eine Schaltkupplung einer Anfahrgangstufe zugeordnet ist

3. Verfahren nach Anspruch 2,
**dadurch gekennzeichnet,**
**dass** mindestens eine Schaltkupplung einer Vorwärtsgangstufe und eine Schaltkupplung einer Rückwärtsfahrstufe betätigt werden.

4. Verfahren nach Anspruch 1,
**dadurch gekennzeichnet,**
**dass** eine Getriebeeingangswelle des Stufengetriebes abgebremst wird.

5. Verfahren nach Anspruch 1,
**dadurch gekennzeichnet,**
**dass** die mindestens eine Schaltkupplung in ersten Betriebszuständen des Kraftfahrzeuges in Richtung Einlegen betätigt wird, wobei ein im Wesentlichen stillstehendes Fahrzeug oder eine Temperatur unter einer Schwellentemperatur die ersten Betriebszustände darstellen.

6. Verfahren nach Anspruch 1,
**dadurch gekennzeichnet,**
**dass** in zweiten Betriebszuständen des Kraftfahrzeuges und Neutralzustand des Stufengetriebes keine Schaltkupplung in Richtung Einlegen betätigt wird.

7. Einrichtung zum Schalten eines automatisierten Stufengetriebes gemäß dem Verfahren nach einem der Ansprüche 1 bis 6

## Claims

1. Method for shifting gears in an automated stepped transmission of a motor vehicle, with it being possible for shift clutches, at least one of which is fitted with a synchronizing device, to be actuated by means of a transmission actuator in order to engage and disengage gear stages of the transmission,
**characterized**
**in that,** in a neutral state of the transmission in which no gear stage is engaged in the transmission and in which the selector lever of the transmission is in a neutral position N, at least one shift clutch is actuated in the direction of engagement, without the at least one gear stage being engaged, in order to synchronize the at least one shift clutch.

2. Method according to Claim 1,
**characterized**
**in that** the at least one shift clutch is assigned to a starting gear stage.

3. Method according to Claim 2,
**characterized**
**in that** at least one shift clutch of a forward gear stage and one shift clutch of a reverse gear stage are actuated.

4. Method according to Claim 1,
**characterized**
**in that** a transmission input shaft of the multi-step transmission is braked.

5. Method according to Claim 1,
**characterized**
**in that,** in first operating states of the motor vehicle, the at least one shift clutch is actuated in the direction of engagement, wherein a substantially stationary vehicle or a temperature below a threshold temperature constitute the first operating states.

6. Method according to Claim 1,
**characterized**
**in that,** in second operating states of the motor vehicle and a neutral state of the multi-step transmission, no shift clutch is actuated in the direction of engagement.

7. Device for shifting gears in an automated stepped transmission according to the method according to one of Claims 1 to 6.

## Revendications

1. Procédé pour passer les vitesses d'une boîte de vitesses étagée automatisée d'un véhicule automobile, dans lequel, pour enclencher et désenclencher des rapports de vitesse de la boîte de vitesses, des embrayages dont au moins un est muni d'un dispositif de synchronisation, peuvent être actionnés au moyen d'un actionneur de boîte de vitesses,
**caractérisé en ce que**
dans un état neutre de la boîte de vitesses, dans lequel aucun rapport de vitesse n'est enclenché dans la boîte de vitesses, et dans lequel le levier de sélection de la boîte de vitesses se trouve dans une position neutre N, au moins un embrayage est actionné dans le sens d'une synchronisation de l'au moins un embrayage dans le sens de l'enclenchement, sans que toutefois l'au moins un rapport de vitesse soit enclenché.

2. Procédé selon la revendication 1,
**caractérisé en ce que**
l'au moins un embrayage est associé à un rapport de vitesse de démarrage.

3. Procédé selon la revendication 2,
**caractérisé en ce que**
l'au moins un embrayage d'un rapport de vitesse de marche avant et un embrayage d'un rapport de vitesse de marche arrière sont actionnés.

4. Procédé selon la revendication 1,
**caractérisé en ce**
**qu'**un arbre d'entrée de boîte de vitesses de la boîte de vitesses étagée est freiné.

5. Procédé selon la revendication 1,
**caractérisé en ce que**
l'au moins un embrayage est actionné dans des premiers états de fonctionnement du véhicule automobile dans le sens d'un enclenchement, un véhicule essentiellement à l'arrêt ou une température en dessous d'une température seuil constituant les premiers états de fonctionnement.

6. Procédé selon la revendication 1,
**caractérisé en ce que**
dans des deuxièmes états de fonctionnement du véhicule automobile et l'état neutre de la boîte de vitesses étagée aucun embrayage n'est actionné dans le sens de l'enclenchement.

7. Dispositif pour passer les vitesses d'une boîte de vitesses étagée automatisée selon le procédé selon l'une quelconque des revendications 1 à 6.
